# EUROPEAN PATENT APPLICATION

(11) **EP 3 192 708 A1**
(43) Date of publication of application: **19.07.2017**
(21) Application number: 16206985.0
(22) Date of filing: 27.12.2016
(51) Int. Cl.: B60R 25/021

(54) **STEERING LOCK DEVICE**

(30) Priority: 14.01.2016 JP 2016005121
(71) Applicant: Kabushiki Kaisha Tokai Rika Denki Seisakusho, Ohguchi-cho Niwa-gun Aichi 480-0195 (JP)
(72) Inventor: KAWACHI, Tomonori, Ohguchi-cho, Niwa-gun, Aichi 480-0195 (JP); KIMURA, Tomonori, Ohguchi-cho, Niwa-gun, Aichi 480-0195 (JP); WASHINO, Shigeru, Toyota-shi, Aichi 471-8571 (JP)
(74) Representative: Viering, Jentschura & Partner mbB Patent- und Rechtsanwälte

(57) **Abstract**

A steering lock device (1) is for use with a steering shaft (5a) and includes a lock mechanism (11) that includes a lock bar (13), a housing (2) that includes an opening (3) and accommodates the lock mechanism (11), a cover (4) that closes the opening (3) of the housing (2), and one or more protective walls (40, 40a to 40d) arranged on the cover (34). The lock bar (13) locks the steering shaft (5a) when the lock bar (13) is moved to an engagement position where the lock bar is engaged with the steering shaft. The one or more protective walls (40, 40a to 40d) are located in one or more imaginary unauthorized access routes (A1, A2, A3, A4) to the lock mechanism (11) extending from outside the steering lock device (1).

## Description

The present invention relates to a steering lock device.

Japanese Laid-Open Patent Publication No. 2007-055292 describes a prior art steering lock device that is mounted on a vehicle. The steering lock device includes a key cylinder and a camshaft, which is rotated when the key cylinder is rotated by a mechanical key, which is, for example, the blade of a key. The rotation of the camshaft moves a lock bar in a locking direction or an unlocking direction to lock or unlock the steering shaft.

There is a need to improve the anti-tampering characteristics of steering lock devices. For example, if someone tampers with a steering lock device when the steering shaft is locked by the steering lock device, it is desirable that the steering lock device be kept in the lock state.

It is an object of the present invention to provide a steering lock device that cannot be unlocked when tampered with.

One aspect of the present invention is a steering lock device for use with a steering shaft. The steering lock device includes a lock mechanism including a lock bar that locks the steering shaft when the lock bar is moved to an engagement position where the lock bar is engaged with the steering shaft, a housing that includes an opening and accommodates the lock mechanism, a cover that closes the opening of the housing, and one or more protective walls arranged on the cover. The one or more protective walls are located in one or more imaginary unauthorized access routes to the lock mechanism extending from outside the steering lock device. In this structure, when the steering lock device is tampered with while in the lock state, the protective walls of the cover hinder or prevent the lock mechanism from being reached when tampered with. This structure is advantageous for preventing unlocking when tampered with by someone.

In the steering lock device, the cover is formed from a harder material than the housing. In this structure, when the steering lock device is tampered with while in the lock state, the protective walls formed from the hard material hinder or prevent the lock mechanism from being tampered with. Thus, this structure is advantageous for improving the anti-tampering characteristics of the steering lock device when tampered with by someone.

In the steering lock device, the one or more protective walls include a first protective wall located in a first imaginary unauthorized access route to the lock mechanism extending from a key cylinder coupled to the housing. In this structure, when the steering lock device is tampered with from the key cylinder side, the protective walls of the cover hinder or prevent the lock mechanism from being reached when tampered with.

In the steering lock device, the one or more protective walls include a second protective wall located in a second imaginary unauthorized access route to the lock mechanism extending from a key interlock unit coupled to the housing. In this structure, when the steering lock device is tampered with from the key interlock unit side, the protective walls of the cover hinder or prevent the lock mechanism from being reached when tampered with.

In the steering lock device, the one or more protective walls include a third protective wall located in a third imaginary unauthorized access route to the lock mechanism extending from a side of the housing located closer to an ignition switch that is coupled to the housing. In this structure, when the steering lock device is tampered with from the ignition switch side, the protective walls of the cover hinder or prevent the lock mechanism from being reached by the tampering.

In the steering lock device, the housing includes an external wall, and the one or more protective walls include a fourth protective wall located in a fourth imaginary unauthorized access route to the lock mechanism extending from the external wall of the housing. In this structure, when the steering lock device is tampered with from outside the external wall of the housing, the protective walls of the cover hinder or prevent the lock mechanism from being reached by the tampering.

In the steering lock device, the one or more protective walls continuously extend around the lock mechanism. In this structure, the protective walls of the cover hinder or prevent the lock mechanism from being reached when tampered with regardless of the direction of the tampering. Thus, this structure is advantageous for preventing unlocking of the steering lock device when tampered with.

The aspects of the invention provide a steering lock device that cannot be unlocked when tampered with.

Other aspects and advantages of the embodiments will become apparent from the following description, taken in conjunction with the accompanying drawings, illustrating by way of example the principles of the invention.

The embodiments, together with objects and advantages thereof, may best be understood by reference to the following description of the presently preferred embodiments together with the accompanying drawings in which:
Fig. 1 is a perspective view showing one embodiment of a steering lock device;
Fig. 2A is a plan view of a camshaft;
Fig. 2B is a diagram showing a cam surface of a lock actuation cam of the camshaft;
Fig. 3 is an exploded perspective view of the steering lock device;
Fig. 4 is a perspective view showing an assembly of a lock bar, a stopper, and a camshaft;
Fig. 5 is a perspective view of a cover and protective walls of the cover;
Fig. 6A is a diagram showing a locked state;
Fig. 6B is a diagram showing an unlocked state; and
Fig. 7 is a diagram showing directions of tampering and positions of the protective walls of the cover.

One embodiment of a steering lock device will now be described.

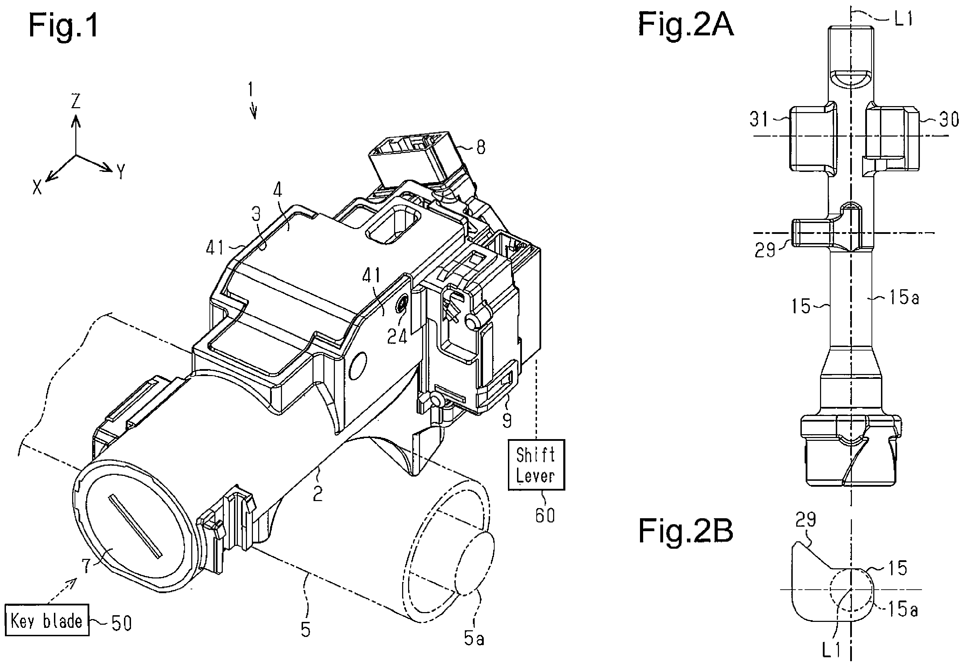

As shown in Fig. 1, a steering lock device 1 is for use with a vehicle and configured to selectively prohibit and permit operation of a steering wheel (not shown). The steering lock device 1 includes a housing 2, which may also be referred to as a lock body, and a cover 4, which closes an opening 3 of the housing 2. The housing 2 is, for example, tubular and is formed from, for example, a magnesium alloy. The material of the cover 4 is, for example, a zinc alloy. The steering lock device 1 is coupled and fixed to a steering column 5, for example, by a bracket (not shown). In the example shown in the drawings, a steering shaft 5a is rotationally accommodated in the steering column 5.

The housing 2 has one end in a longitudinal direction (X-axis direction in Fig. 1) of the steering lock device 1, and a key cylinder 7 is coupled to the longitudinal end and operated by a key blade 50. The housing 2 has a distal end including a key cylinder port 2a. The key cylinder 7 is inserted into the key cylinder port 2a to close the key cylinder port 2a and couple the key cylinder 7 to the housing 2. The housing 2 has a basal end to which an ignition switch 8 is coupled. The ignition switch 8 switches power states (vehicle power states) in accordance with an operation position of the key cylinder 7. A key interlock unit 9 is coupled to one side of the housing 2. The key interlock unit 9 permits removal of the key blade 50 from the key cylinder 7 only when a shift lever 60 of a vehicle is located at a parking position.

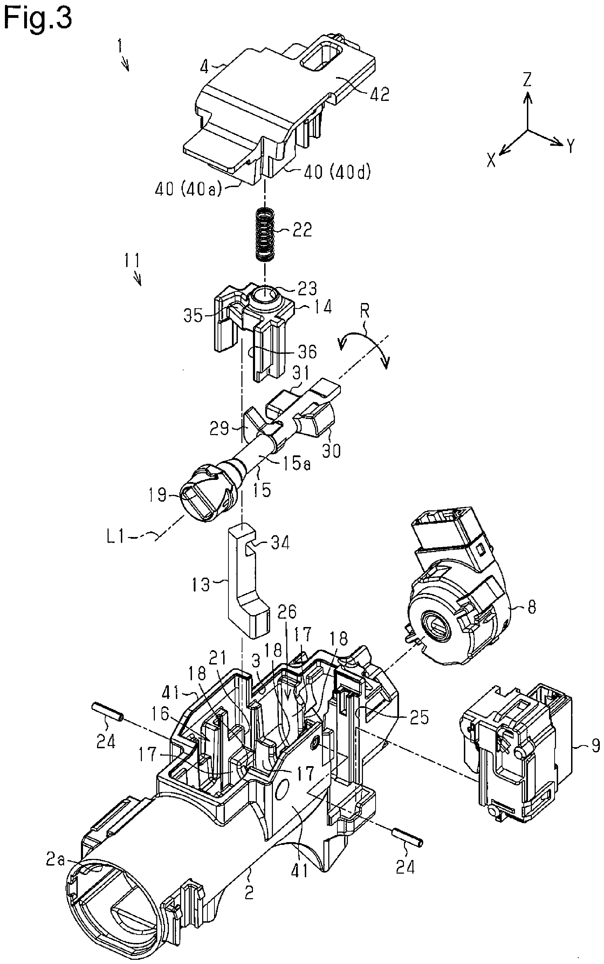

As shown in Fig. 3, the steering lock device 1 includes a lock mechanism 11, which is located in the housing 2 and inaccessible from outside the steering lock device 1. The lock mechanism 11 includes a lock bar 13, which is capable of engaging the steering shaft 5a, a stopper 14, which is coupled to the lock bar 13, and a camshaft 15, which is rotated when the key cylinder 7 is operated with the key blade 50. As indicated by two-direction arrows R in Fig. 3, the camshaft 15 is rotational about an axis L1 of the camshaft 15 in the clockwise direction and the counterclockwise direction. The housing 2 includes a component receptacle 16. The component receptacle 16 accommodates the lock bar 13, the stopper 14, and the camshaft 15. The component receptacle 16 includes shaft seats 17, which may be a plurality of (e.g., three) walls spaced apart from one another in a longitudinal direction of the housing 2. Each shaft seat 17 includes an arcuate slot 18. The camshaft 15 is rotationally mounted on the shaft seats 17 (slots 18). The camshaft 15 has one end that includes an elongated receptacle 19, to which the key cylinder 7 is coupled.

The stopper 14 is coupled to the housing 2 in a manner that is linearly and reciprocally movable along two guides 21 (only one shown in Fig. 3), which are formed in inner wall surfaces of the housing 2. The stopper 14 comes into contact with the lock bar 13 to adjust the length of a portion of the lock bar 13 that projects out of the housing 2. The stopper 14 may be referred to as a movable stopper or a lock stopper. An urging element 22 is located between the cover 4 and the stopper 14 to urge the stopper 14 in the locking direction (lower direction in Fig. 3). The urging element 22 may be a coil spring, which may also be referred to as a lock spring. The urging element 22 has one end that is accommodated in a hole 23 located in an upper surface of the stopper 14. The urging element 22 has another end that is supported by an inner surface of the cover 4. The cover 4 is coupled to the housing 2 by press-fitting pins 24. The urging element 22 is compressed between the cover 4 and the stopper 14. The lock bar 13 is urged away from the cover 4 by the urging element 22.

The housing 2 includes an interlock coupling portion 25, to which the key interlock unit 9 is coupled. The interlock coupling portion 25 includes an accommodation space 26, which accommodates at least a portion of the key interlock unit 9. The accommodation space 26 is part of the component receptacle 16.

As shown in Figs. 2A, 2B, and 3, the camshaft 15 includes a lock actuation cam 29 having a cam surface, which comes into contact with the stopper 14 to move the stopper 14 in the locking direction or the unlocking direction. The camshaft 15 includes a cylindrical portion 15a, from which the lock actuation cam 29 projects in a radial direction. When the stopper 14 and the camshaft 15 are coupled to the housing 2, the lock actuation cam 29 is in contact with the stopper 14.

The camshaft 15 includes an interlock cam 30 having the shape of a cam to actuate the key interlock unit 9. The lock actuation cam 29 and the interlock cam 30 are separated from each other in the direction extending along the axis L1 of the camshaft 15 (X-axis direction in Fig. 3). Also, the lock actuation cam 29 and the interlock cam 30 are located at opposite sides of the axis L1 of the camshaft 15.

The camshaft 15 includes a counterweight 31, which adjusts the rotational balance of the camshaft 15. The counterweight 31 projects from the camshaft 15 (cylindrical portion 15a) in a radial direction. The counterweight 31 is located at a side opposite to the side of the interlock cam 30. The counterweight 31 is arranged in the accommodation space 26, which is located in the interlock coupling portion 25 of the housing 2. The position and the shape of the counterweight 31 are changed in accordance with weights, shapes, and positions of the lock actuation cam 29 and the interlock cam 30 of the camshaft 15.

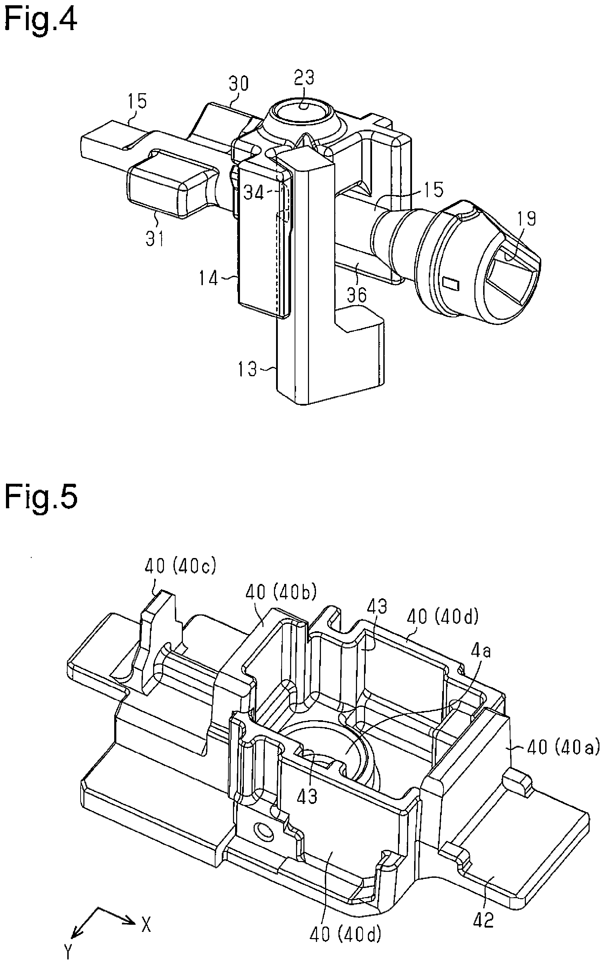

As shown in Fig. 4, the lock bar 13 has a basal end including a recess 34. The stopper 14 includes an engagement portion 35 (refer to Fig. 3). When the recess 34 engages the engagement portion 35, the lock bar 13 is coupled to the stopper 14. Thus, the lock bar 13 and the stopper 14 are moved integrally with each other in the locking direction and the unlocking direction. The stopper 14 has a lower portion including a cutaway portion 36. The camshaft 15 is located in the cutaway portion 36 when the stopper 14 and the camshaft 15 are coupled to the housing 2.

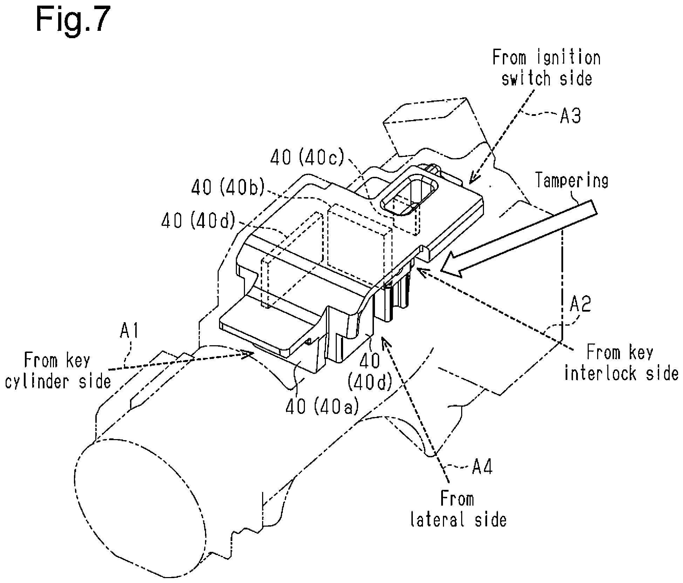

The structure of the cover 4 will now be described with reference to Figs. 5 and 7. The cover 4 includes one or more protective walls 40. The one or more protective walls 40 are located in one or more imaginary unauthorized access routes to the lock mechanism 11 extending from outside the steering lock device 1. The one or more protective walls 40 may include a first protective wall 40a, which is located in a first imaginary unauthorized access route A1 to the lock mechanism 11 extending from the key cylinder side, a second protective wall 40b, which is located in a second imaginary unauthorized access route A2 to the lock mechanism 11 extending from the key interlock unit side, a third protective wall 40c, which is located in a third imaginary unauthorized access route A3 to the lock mechanism 11 extending from the ignition switch side, and two fourth protective walls 40d, which are located in a fourth imaginary unauthorized access route A4 to the lock mechanism 11 extending from external walls 41 (e.g., refer to Fig. 1) of the housing 2. In the example shown in the drawings, each imaginary unauthorized access routes A1 to A4 is a straight-line route.

The protective walls 40 are located on the inner surface of the cover 4 and cannot be seen from outside the steering lock device 1. The cover 4 includes a seat 4a (refer to Fig 5), which directly supports the urging element 22. The group of the protective walls 40a, 40b, 40d extends around the seat 4a (refer to Fig. 5) of the cover 4 but is not in contact with the seat 4a.

Each of the first to fourth protective walls 40a to 40d inwardly extends in the housing 2 from an inner surface 42 of the cover 4. The two fourth protective walls 40d are spaced apart from each other in a width direction of the cover 4 (Y-axis direction in Fig. 5). The first protective wall 40a, the second protective wall 40b, and the two fourth protective walls 40d are arranged to continuously extend around the lock mechanism 11. The group of the first protective wall 40a, the second protective wall 40b, and the two fourth protective walls 40d has the form of, for example, a polygonal frame, an annular frame, or a tube. The third protective wall 40c is arranged separately from the group of the first protective wall 40a, the second protective wall 40b, and the two fourth protective walls 40d. The third protective wall 40c, the first protective wall 40a, and the second protective wall 40b are arranged side by side in a longitudinal direction of the cover 4 (X-axis direction in Fig. 5) and may be substantially parallel to one another. Inner surfaces of the two fourth protective walls 40d are recessed to define two guides 43, which guide reciprocal movement of the stopper 14. This allows the group of the protective walls 40a, 40b, 40d to extend around at least a portion of the urging element 22 in addition to the seat 4a of the cover 4.

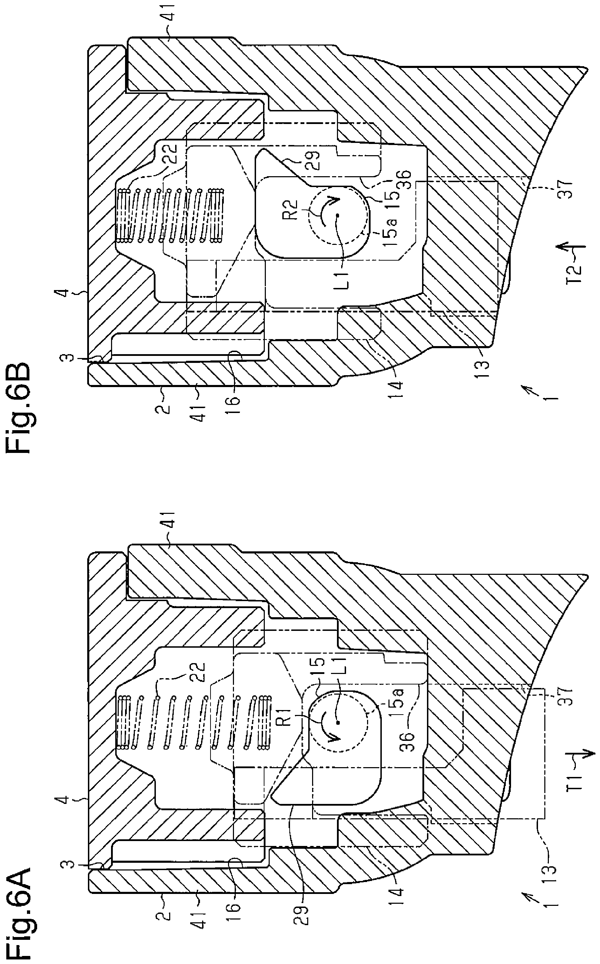

As shown in Fig. 6A, for example, when the key cylinder 7 is moved to an ignition off position, the camshaft 15 is rotated in the locking direction (direction indicated by arrow R1 in Fig. 6A) and the lock bar 13 and the stopper 14 are moved in a locking direction (indicated by arrow T1) by urging force of the urging element 22. Consequently, the lock bar 13 extends out of a hole 37 of the housing 2 and engages the steering shaft 5a. This locks the steering lock device 1.

As shown in Fig. 6B, for example, when the key cylinder 7 is moved to an ACC on position or an ignition on position, the camshaft 15 is rotated in the unlocking direction (direction indicated by arrow R2 in Fig. 6B) and the lock bar 13 and the stopper 14 are lifted by the lock actuation cam 29 of the camshaft 15 in an unlocking direction (indicated by arrow T2) against the urging force of the urging element 22. Consequently, the lock bar 13 is separated from the steering shaft 5a and retracted into the housing 2. This unlocks the steering lock device 1.

The operation of the steering lock device 1 will now be described.

As shown in Fig. 7, for example, someone may attempt to physically break the housing 2 with a tool or the like and remove the urging element 22 (lock spring) from the housing 2 for the purpose of unauthorized unlocking of the steering lock device 1, which is in the lock state. When the urging element 22 is removed from the lock bar 13 by that person, the lock bar 13 is not urged toward the steering shaft 5a. This may allow that person to be closer to success of the unauthorized unlocking of the steering lock device 1.

However, the steering lock device 1 of the embodiment includes the protective walls 40 arranged on the cover 4. The protective walls 40 of the cover 4 are located in one or more imaginary unauthorized access routes to the lock mechanism 11 extending from outside the steering lock device 1. Thus, if someone tampers with the steering lock device 1 from outside when the steering lock device 1 is coupled to a vehicle body such as a steering column and in the lock state, the protective walls 40 of the cover 4 hinder or prevent the lock mechanism 11 from being reached by the tampering. This is advantageous for preventing unlocking when tampered with.

The protective walls 40 of the cover 4 are hidden in the housing 2 and cannot be seen from outside the steering lock device 1. The protective walls 40 prolong the time needed for someone to perform unauthorized unlocking. When someone tries to tamper with the steering lock device 1 that takes a longer time than expected, this will deter that person from continuing further tampering and thus prevent theft of the vehicle.

The cover 4 includes the first protective wall 40a, which is located in the first imaginary unauthorized access route A1 to the lock mechanism 11 extending from the key cylinder side. When the steering lock device 1 is tampered with from the key cylinder side, the first protective wall 40a of the cover 4 hinders or prevents the lock mechanism 11 from being reached when tampered with. This improves the anti-tampering characteristics of the steering lock device 1 when tampered with from the key cylinder side.

In the same manner, the second protective wall 40b of the cover 4 improves the performance of the steering lock device 1 for maintaining the lock state when tampered with from the key interlock unit side. The third protective wall 40c improves the performance of the steering lock device 1 for maintaining the lock state when tampered with from the ignition switch side. One or both of the fourth protective walls 40d improves the performance of the steering lock device 1 for maintaining the lock state when tampered with from outside one or both sides of the external walls 41 of the housing 2.

The protective walls 40 are arranged on the inner surface 42 of the cover 3 to continuously extend around the lock mechanism 11. For example, the group of the first protective wall 40a, the second protective wall 40b, and the two fourth protective walls 40d continuously extends around the lock mechanism 11. Any one of the protective walls 40 hinders or prevents the lock mechanism 11 from being reached when tampered with regardless of the direction of the tampering.

The protective walls 40 (e.g., second protective wall 40b) of the cover 4 each function as a guide when coupling the stopper 14 of the lock mechanism 11 to the housing 2. This stably positions the stopper 14 and increases the accuracy and easiness of the coupling task.

The cover 4 is formed from a material that is harder than that forming the housing 2. In some implementations, the cover 4 is formed from a zinc alloy through die casting, and the housing 2 is formed from a magnesium alloy to reduce the weight. The cover 4 (protective walls 40) formed from the hard material is advantageous for improving the anti-tampering characteristics. The housing 2 formed from the zinc alloy contributes to the weight reduction. In this specification, the term "hard" may refer to hardness in terms of strength, high toughness, and/or low ductility.

The embodiment may be modified as follows.

The number, the shape, and the position of the protective walls 40a to 40d may be changed as necessary or in accordance with the position of the steering lock device 1 relative to the steering shaft.

The shape of the protective walls 40a to 40d may be changed as long as the protective walls 40a to 40d are capable of accommodating a portion of the lock mechanism 11.

The protective walls 40a to 40d only need to have a shape that extends around at least the urging element 22 from an outer side.

Preferably, the protective walls 40a to 40d continuously extend around the lock mechanism 11. However, the protective walls 40a to 40d may extend along only a selected portion of the lock mechanism 11.

The structure of the lock mechanism 11 may be changed as long as the steering shaft can be locked.

When the stopper 14 is omitted, the camshaft 15 may directly move the lock bar 13.

The opening 3 of the housing 2 only needs to be large enough to allow for insertion of the camshaft 15.

The position of the opening 3 in the housing 2 is not limited to the upper surface of the housing 2. The opening 3 may be located at another position, for example, a side surface of the housing 2.

It is preferred that each component of the steering lock device 1 be coupled in the downward direction shown in Fig. 3. However, the direction may be changed as long as the elements are coupled in the same direction.

The interlock cam 30 may be omitted.

The steering lock device 1 may be of a mechanical-driven type or an electrical-driven type.

It should be apparent to those skilled in the art that the present invention may be embodied in many other specific forms without departing from the scope of the invention. For example, one or more of the components may be omitted from the components described in the embodiments (or one or more aspects thereof). Further, components in different embodiments may be appropriately combined.

The present examples and embodiments are to be considered as illustrative and not restrictive, and the invention is not to be limited to the details given herein, but may be modified within the scope and equivalence of the appended claims.

## Claims

1. A steering lock device (1) for use with a steering shaft (5a), the steering lock device (1) comprising:
a lock mechanism (11) including a lock bar (13) that locks the steering shaft (5a) when the lock bar (13) is moved to an engagement position where the lock bar (13) is engaged with the steering shaft (5a);
a housing (2) including an opening (3), wherein the housing (2) accommodates the lock mechanism (11);
a cover (4) that closes the opening (3) of the housing (2); and
one or more protective walls (40, 40a to 40d) arranged on the cover (4), wherein the one or more protective walls (40, 40a to 40d) are located in one or more imaginary unauthorized access routes (A1 to A4) to the lock mechanism (11) extending from outside the steering lock device (1).

2. The steering lock device (1) according to claim 1, the cover (4) is formed from a harder material than the housing (2).

3. The steering lock device (1) according to claim 1 or 2, wherein the one or more protective walls (40) include a first protective wall (40a) located in a first imaginary unauthorized access route (A1) to the lock mechanism (11) extending from a key cylinder (7) coupled to the housing (2).

4. The steering lock device (1) according to any one of claims 1 to 3, wherein the one or more protective walls (40) include a second protective wall (40b) located in a second imaginary unauthorized access route (A2) to the lock mechanism (11) extending from a key interlock unit (9) coupled to the housing (2).

5. The steering lock device (1) according to any one of claims 1 to 4, wherein the one or more protective walls (40) include a third protective wall (40c) located in a third imaginary unauthorized access route (A3) to the lock mechanism (11) extending from a side of the housing (2) located closer to an ignition switch that is coupled to the housing (2).

6. The steering lock device (1) according to any one of claims 1 to 5, wherein
the housing (2) includes an external wall (41), and
the one or more protective walls (40) include a fourth protective wall (40d) located in a fourth imaginary unauthorized access route (A4) to the lock mechanism (11) extending from the external wall (41) of the housing (2).

7. The steering lock device (1) according to any one of claims 1 to 6, wherein the one or more protective walls (40) continuously extend around the lock mechanism (11).

8. The steering lock device (1) according to any one of claims 1 to 7, wherein the one or more protective walls (40, 40a to 40d) of the cover (4) are hidden inside the housing (2) and concealed from outside the steering lock device (1).

9. The steering lock device (1) according to any one of claims 1 to 8, wherein
the cover (4) includes a seat (4a),
the lock mechanism (11) includes an urging element (22) directly supported by the seat (4a) of the cover (4),
the urging element (22) urges the lock bar (13) away from the cover (4), and the one or more protective walls (40, 40a to 40d) extend around the seat (4a) of the cover (4) without contacting the seat (4a) of the cover (4).

10. The steering lock device (1) according to claim 9, wherein
the lock mechanism (11) includes a movable stopper (14) located between the urging element (22) and the lock bar (13),
the movable stopper (14) adjusts a length of a portion of the lock bar (13) that projects out of the housing (2), and
the one or more protective walls (40) include a guide (43) that is in sliding contact with the movable stopper (14) to guide the movable stopper (14).
